Europäisches Patentamt

European Patent Office

Office européen des brevets

(19)

(11) Veröffentlichungsnummer: **0 272 338**
**B1**

## (12) EUROPÄISCHE PATENTSCHRIFT

(45) Veröffentlichungstag der Patentschrift:
**04.07.90**

(21) Anmeldenummer: **86117843.2**

(22) Anmeldetag: **20.12.86**

(51) Int. Cl.⁵: **B29B 7/18, B29B 7/24**

(54) **Innenmischer.**

(43) Veröffentlichungstag der Anmeldung:
**29.06.88 Patentblatt 88/26**

(45) Bekanntmachung des Hinweises auf die Patenterteilung:
**04.07.90 Patentblatt 90/27**

(84) Benannte Vertragsstaaten:
**DE ES FR GB IT**

(56) Entgegenhaltungen:
**DE-C- 735 111**
**DE-C- 3 426 442**
**GB-A- 485 542**

(73) Patentinhaber: **Continental Aktiengesellschaft, Königsworther Platz 1, D-3000 Hannover 1(DE)**

(72) Erfinder: **Ruthenberg, Klaus, Im Goldfeld 20, D-3003 Ronnenberg(DE)**
Erfinder: **Müller, Friedhelm, Bogenstrasse 12, D-5905 Freudenberg(DE)**

(74) Vertreter: **Schneider, Egon, c/o CONTINENTAL Aktiengesellschaft Königsworther Platz 1 Postfach 169, D-3000 Hannover 1(DE)**

EP 0 272 338 B1

## Beschreibung

Die Erfindung bezieht sich auf einen Innenmischer mit dem im Oberbegriff des Anspruchs 1 angegebenen Aufbau.

Solche Innenmischer werden zur Aufbereitung plastischer Massen, insbesondere Kautschuk, verwendet, wobei die plastischen Massen und die Zugabestoffe nacheinander in den Innenmischer eingeführt, dort durchmischt und durchknetet und schließlich ausgetragen werden. Bei diesen Vorgängen wirken erhebliche Drücke auf den Stempel ein, die jedoch nicht zum Verkanten der hydraulischen Betätigungseinrichtung führen dürfen.

Bei einem bekannten Innenmischer der oberbegrifflichen Art (DE 34 26 442 C1) ist der Stempel am beweglichen Zylindergehäuse befestigt während der Kolben und die Kolbenstange über sphärische Lager an einem gehäusefesten Aufbau befestigt sind, der ein Querhaupt und einen Zuganker beinhaltet. Dieser Aufbau ragt relativ weit nach oben, entsprechend der maximalen Ausfahrlänge der hydraulischen Betätigungseinrichtung, was zu Beeinträchtigungen des Quertransportes von Gütern in der Halle führen kann, in welcher der Innenmischer aufgestellt ist. Wenn der Innenmischer eine Bauhöhe aufweist, die der Laufhöhe des Hallenkranes über Flur entspricht, ist es nicht mehr möglich, mit dem Kran über den Innenmischer zu fahren. Während pneumatisch angetriebene Innenmischer eine gewisse puffernde Nachgiebigkeit des Stempels im Mischbetrieb zeigen - und dafür den Nachteil größerer Energieverluste wegen des pneumatischen Betriebes in Kauf nehmen - sind hydraulisch angetriebene Innenmischer der vorbekannten Art gewissermaßen starr, d. h. der Stempel kann unter stoßender Belastung beim Mischbetrieb kaum nachgeben.

Der Erfindung liegt die Aufgabe zugrunde, einen Innenmischer mit einer hydraulischen Betätigungseinrichtung zu schaffen, der relativ gedrungen gebaut ist, wobei jedoch die hydraulische Führung des Kolbens und seiner Kolbenstange von Umgebungseinflüssen im Füllschacht weiterhin frei bleiben soll. Ferner soll der Stempel trotz seines hydraulischen Antriebs in der Misch-Betriebsstellung, wie auf einem Puffer schwimmend, gehalten werden.

Gemäß der Erfindung ist der Stempel mit Stempelstangenmitteln verbunden, die an gehäusefesten Führungsmitteln geführt sind und die an einem bewegbaren Querhaupt befestigt ist, ferner enthält die Betätigungseinrichtung zwei oder mehrere hydraulische, doppelwirkende Zylinder, die seitlich vom Füllschacht und um die Stempelstangenmittel symmetrisch verteilt angeordnet sind und die einerseits am Querhaupt und andererseits am Mischergehäuse oder am Füllschacht mit einer gewissen Beweglichkeit befestigt sind.

Durch die Anordnung der Zylinder seitlich vom Füllschacht kann insgesamt an Bauhöhe eingespart werden. Darüber hinaus kann man den Innenmischer so ausbilden, daß das bewegbare Querhaupt das oberste Bauteil ist. Wenn es für einen Quertransport nötig sein sollte, kann sich der Innenmischer also "ducken".

Die symmetrische Anordnung der Zylinder setzt die Gefahr des Verkantens der Kolben und Kolbenstangen von sich aus herab; darüber hinaus werden Herstellungsungenauigkeiten oder Fehlführungen des Stempels infolge eingeklemmten Materials durch die bewegliche Verbindung zwischen den Zylindern und dem Querhaupt ausgeglichen.

Gemäß einer Ausgestaltung der Erfindung enthält die hydraulische Steuereinrichtung eine Einlaßleitung zur Hydraulikflüssigkeitszufuhr, eine Auslaßleitung zur Hydraulikflüssigkeitsabfuhr, eine erste Arbeitsleitung zur Abwärtsfahrt des Stempels, eine zweite Arbeitsleitung zur Aufwärtsfahrt des Stempels, eine Verbindungsleitung zwischen den Arbeitsleitungen, eine Ablaufleitung zum gedrosselten Hydraulikflüssigkeitsrücklauf, eine Nachsaugleitung, einen mit der Einlaßleitung verbundenen ersten Druckspeicher, einen mit der Nachsaugleitung verbundenen zweiten Druckspeicher sowie Ventileinrichtungen zur Verbindung und Sperrung der Leitungen untereinander und zur Einstellung der Betriebszustände "Aufwärtsfahrt des Stempels", "Abwärtsfahrt des Stempels", "Halten des Stempels in oberer Lage", "Halten des Stempels in unterer Lage" bzw. "Mischbetriebsstellung"; in der Stellung der Ventileinrichtungen für Mischbetriebsstellung ist die Nachsaugleitung mit dem zweiten Druckspeicher an die zweite Arbeitsleitung anschließbar, während die erste Arbeitsleitung mit dem ersten Druckspeicher in Verbindung steht. Dadurch werden die Kolben der Zylinder, welche die Kolbenräume für die Abwärtsfahrt bzw. den Vorschub von denen für die Aufwärtsfahrt bzw. den Rückhub trennen, hydraulisch eingespannt, jedoch mit einer Nachgiebigkeit, wie diese durch die Druckspeicher mit ihrer Gasblase gegeben ist. Dadurch zeigt das Hydrauliksystem Federeigenschaften, die zu einer angemessenen, federnden Halterung des Stempels im Füllschacht führt. Beim Arbeiten des Innenmischers drückt demnach der Stempel mit einer Federkraft auf das Mischgut und kann zurückweichen, wenn der örtliche Druck im Mischraum zu hoch wird.

Ausführungsbeispiele der Erfindung werden anhand der Zeichnung beschrieben. Dabei zeigt:

Fig. 1 einen Längsschnitt durch einen Innenmischer,
Fig. 2 eine Seitenansicht gemäß Pfeil II in Fig. 1,
Fig. 3 eine Ansicht von oben,
Fig. 4 und 5 Längsschnitte durch das obere Ende eines alternativen Innenmischers und
Fig. 6 ein hydraulisches Schema.

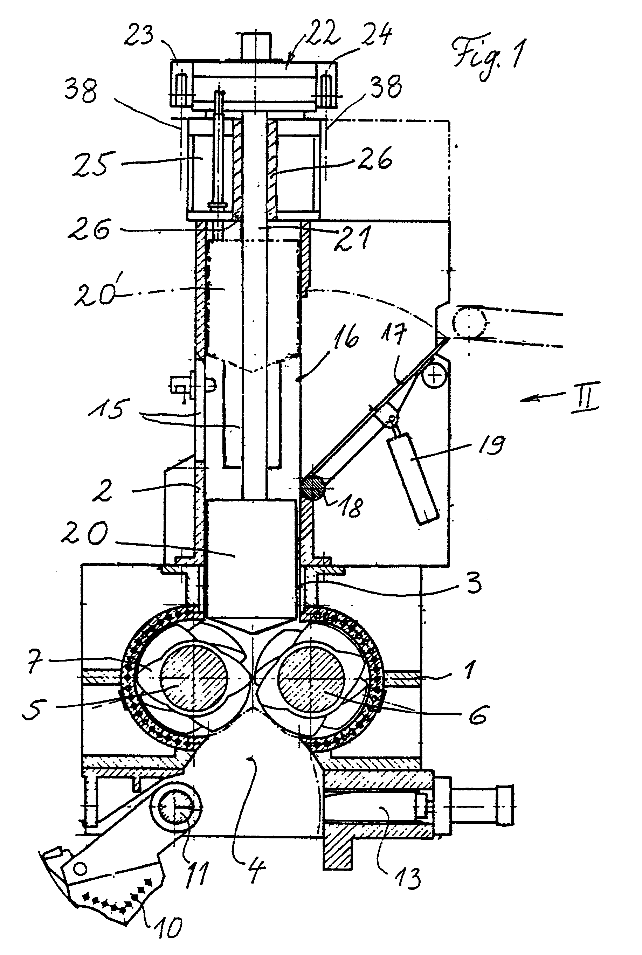

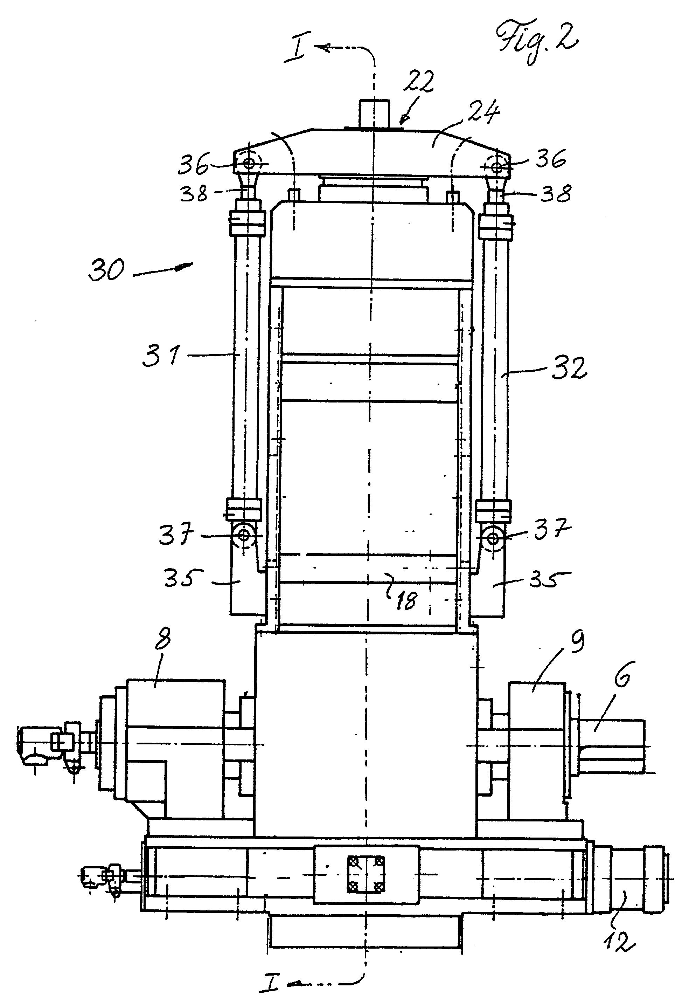

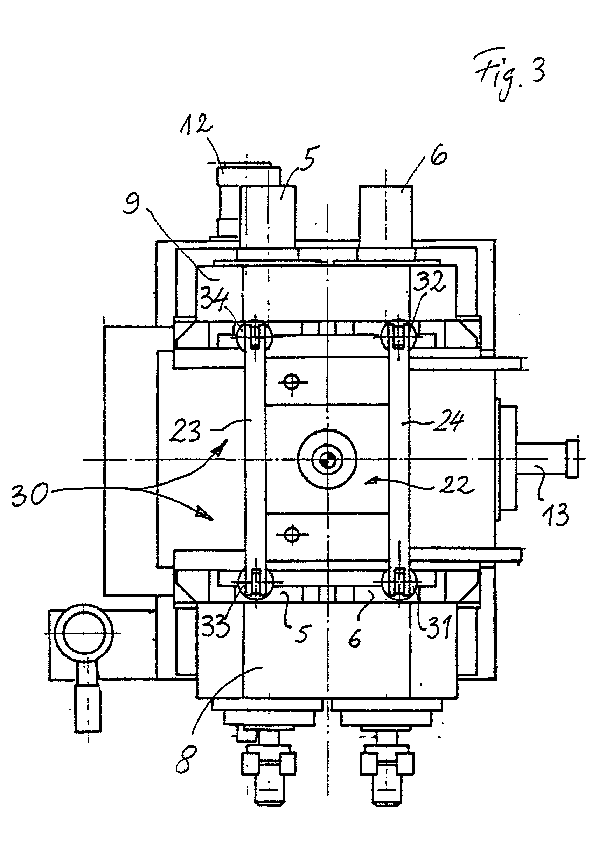

Der in Fig. 1 bis 3 dargestellte Innenmischer weist als Gehäusebauteile ein Mischergehäuse 1 und einen Füllschacht 2 auf. Das Mischergehäuse 1 besitzt eine Beschickungsöffnung 3 und eine Entleerungsöffnung 4, ferner sind axiale Bohrungen zum Durchtritt zweier Mischerwellen 5 und 6 vorgesehen, die mit Misch- oder Knetschaufeln 7 versehen sind. Die Mischerwellen 5 und 6 sind außerhalb des Mischergehäuses 1 gelagert, wobei die entsprechenden Lagergehäuse 8 und 9 in Fig. 2 und 3 ersichtlich sind. Die Entleerungsöffnung 4 wird normalerweise von einem Schwenksattel 10 verschlossen, der mittels einer Welle 11 und einem Motor 12 in und aus der Öffnung 4 verschwenkt werden kann. Der Schwenksattel 10 wird in seiner geschlossenen Stellung durch einen Riegel 13 gehalten.

Der Füllschacht 2 weist rechteckförmigen Querschnitt auf, hat also zwei Breitseiten und zwei Schmalseiten. In diesen sind Zugangsöffnungen 15 und eine Füllöffnung 16 vorgesehen, die normalerweise verschlossen sind. Die Füllöffnung 16 weist eine Klappe 17 auf, die um eine Achse 18 mittels eines Zylinders 19 geschwenkt werden kann, um in der Offenstellung als Rutsche zu wirken, wenn über ein strichpunktiert angedeutetes Fördermittel das zu mischende Gut eingefüllt wird. Die Zugangsöffnungen 15 können zur Zufuhr von Zuschlagsstoffen verwendet werden.

Das Innere des Füllschachts 2 ist als Führung für einen Stempel 20 ausgebildet, dessen Form einem Quader mit aufgesetztem Dach entspricht, wobei die Dachform nach unten schaut. Der Stempel 20 ist mit einer Stempelstange 21 verbunden, deren oberes Ende in ein Querhaupt 22 eingespannt ist. Am Querhaupt 22 sind zwei Querträger 23, 24 angebracht. Das obere Ende des Füllschachts 2 wird von einem Abschluß- und Lagergehäuse 25 abgedeckt, in welchem ein Gleitlager 26 für die Stempelstange 21 untergebracht ist, ferner auch Abtasteinrichtungen für die Stellung des Stempels 20. Dieser ist zwischen seiner strichpunktierten oberen Stellung und einer eingezeichneten unteren Stellung hydraulisch verfahrbar, wobei die Betätigungseinrichtung auch Zwischenstellungen des Stempels ermöglicht.

Die hydraulische Betätigungseinrichtung 30 weist vier symmetrisch angeordnete Zylinder 31 bis 34 auf, deren Enden mit einer gewissen Flexibilität mit dem Querhaupt 22 bzw. mit Fortsätzen 35 des Füllschachtes 2 verbunden sind. Die Flexibilität einfacher Gelenke 36 und 37 ist ausreichend. Die dargestellte Anordnung der Kolbenstangen 38 oben, d. h. die Verbindung der Kolbenstangen 38 über die Gelenke 36 mit dem Querhaupt 22, wird bevorzugt, da auf diese Weise die Hydraulikzufuhr zu den Kolbenräumen der Zylinder 31 bis 34 über die stationären Zylindergehäuse erfolgen kann. Es wird darauf hingewiesen, daß der Stempel 20 (Fig. 1) in der dargestellten "geduckten" Lage des Querhauptes 22 seine Mischbetriebsstellung einnimmt, in welcher eine federnde Nachgiebigkeit gegeben ist, wie noch beschrieben wird. Bei Beaufschlagung der Zylinder 31 bis 34 werden die Kolbenstangen 38 ausgefahren, wobei dann das Querhaupt 22 in eine Lage oberhalb des Zeichnungsrandes in Fig. 1 und 2 käme.

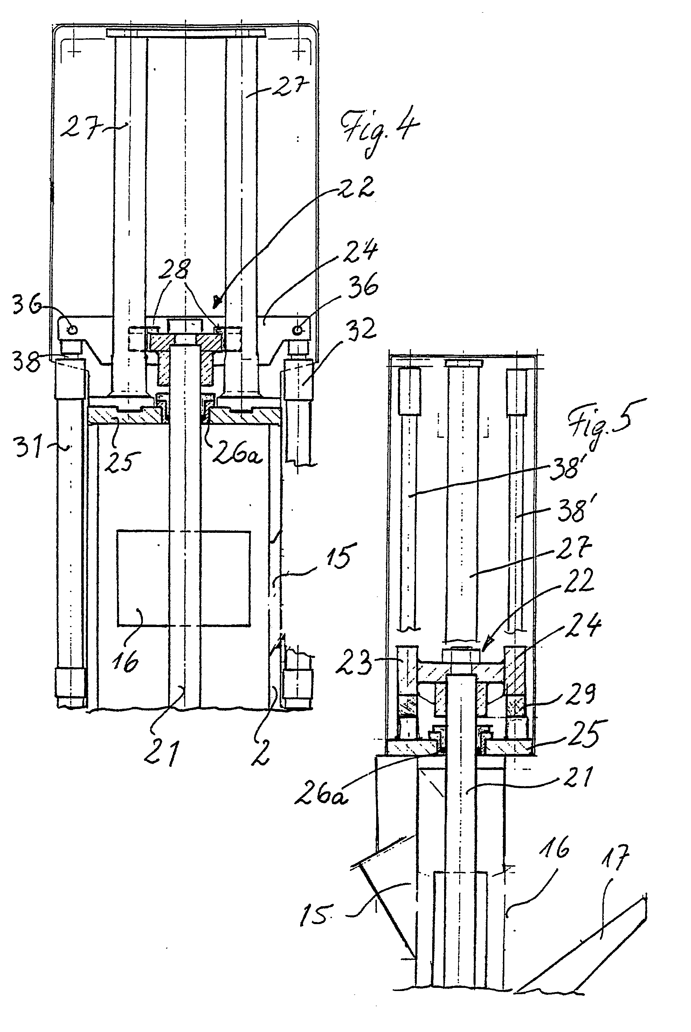

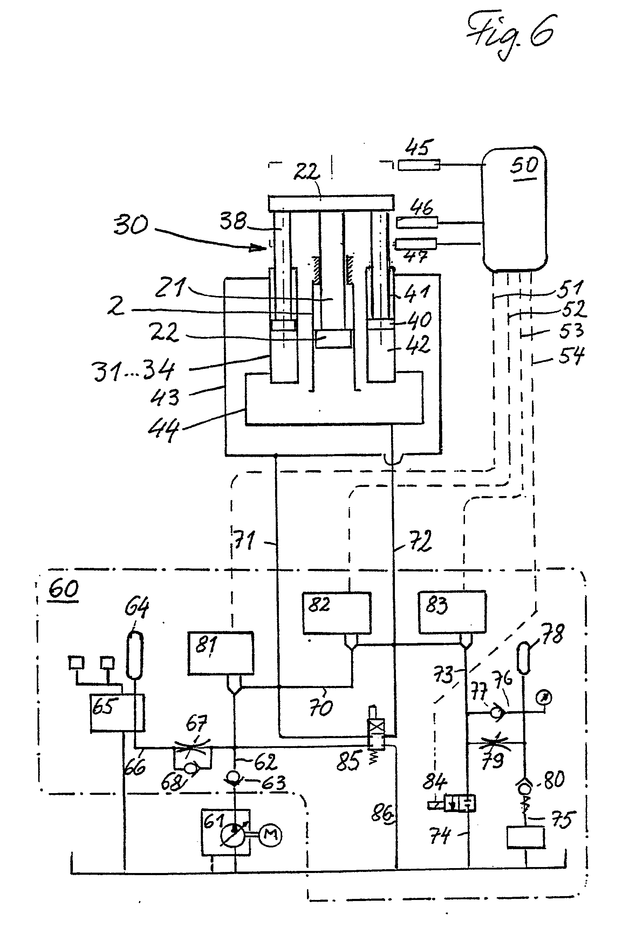

Fig. 4 und 5 zeigen eine alternative Ausführungsform des Innenmischers im Bereich des Querhauptes 22. Bauteile, welche der Ausführungsform nach Fig. 1 bis 3 entsprechen, sind mit den gleichen Bezugszeichen belegt. Abweichend von der ersten Ausführungsform ist nur das Gleitlager 26 für die Stempelstange 21 ausgebildet. Die dargestellte KOnstruktion enthält zwei Führungsstangen 27 und Halblagerschalen 28, die sich an den Innenseiten der Führungsstangen 27 abstützen und als Teil des Querhauptes 22 angesprochen werden können. Eine Stopfbuchse 26a des Lagergehäuses 25 erfüllt die Dichtfunktion gegenüber dem Füllschacht 2. Gummipuffer 29 dämpfen die beim Abwärtshub auftretenden Stöße und sind zwischen dem Lagergehäuse 25 und dem Querhaupt 22 angeordnet. Die obere Stellung der Kolbenstangen ist mit 38' in Fig. 5 angedeutet. Wegen der aufragenden Stangenführungen 27 ist die Bauweise nach Fig. 4 und 5 nicht so kompakt wie die Bauweise nach Fig. 1 bis 3; ein gewisser Ausgleich wird dadurch erzielt, daß für die Stopfbuchse 26a nur eine geringe Baulänge benötigt wird und die Lagerschalen 28 innerhalb der Bauhöhe des Querhauptes 22 angeordnet sind. Gegenüber der vorbekannten Einrichtung (DE 34 26 442 C1) wird dadurch an Bauhöhe eingespart, da es keine Zylinder mit Hydraulikölzufuhr und -abfuhr über die Kolbenstange gibt, so daß die Ausfahrlänge des Zylinders im Verhältnis zu seiner Baulänge im eingefahrenen Zustand günstiger ist.

In Fig. 6 ist das Innere der hydraulischen Betätigungseinrichtung 30 dargestellt. Die Zylinder weisen jeweils einen Kolben 40, einen ringförmigen Kolbenraum 41 und einen zylindrischen Kolbenraum 42 auf. Die ringförmigen Kolbenräume 41 sind untereinander über erste Verteilleitungen 43 und die zylindrischen Kolbenräume 42 über zweite Verteilleitungen 44 miteinander verbunden. Abtasteinrichtungen für die Stellung des Stempels 20 in Form von Lichtschranken sind bei 45, 46 und 47 angedeutet, die mit einer Steuerelektronik 50 verbunden sind, die wiederum mit einer hydraulischen Steuereinrichtung 60 über Steuerleitungen 51 bis 54 verbunden ist.

Eine Hydropumpe 61 mit veränderlichem Verdrängungsvolumen ist über eine Einlaßleitung 62, in welcher ein Rückschlagventil 63 angeordnet ist, mit der hydraulischen Steuereinrichtung 60 verbunden, um die zum Betrieb der Einrichtung notwendige Hydraulikflüssigkeit zu liefern. Ein erster Druckspeicher 64, der eine Druckregeleinrichtung 65 aufweist, ist über eine Leitung 66, die eine Stromregeleinrichtung 67 und ein Rückschlagventil 68 enthält, welche parallel zueinander geschaltet sind, mit der Einlaßleitung 62 verbunden. Bei der Stromregeleinrichtung 67 kann es sich auch um ein einfaches Drosselventil handeln. Eine Verbindungsleitung 70 verbindet eine erste Arbeitsleitung 71 mit einer zweiten Arbeitsleitung 72 und führt auf ein gemeinsames Leitungsstück 73, von welchem eine Auslaßleitung 74, eine Ablaufleitung 75 und eine Nachsaugleitung 76 abzweigen. Die Nachsaugleitung 76 beherbergt ein Rückschlagventil 77 und führt zu einem zweiten Druckspeicher 78, der über eine zum Rückschlagventil 77 parallel geschaltete Stromregeleinrichtung 79 vom gemeinsamen Leitungsstück 73 her aufgeladen werden kann. Die Stromregeleinrichtung 79 verbindet auch das gemeinsame Leitungsstück 73 mit der Ablaufleitung 75, in welcher ein Rückschlagventil 80 mit einstellbarem Öffnungsdruck von beispielsweise 4 bar angeordnet ist.

Ein erstes fernsteuerbares Ventil 81 verbindet die Einlaßleitung 62 mit der Verbindungsleitung 70. Ein zweites fernsteuerbares Ventil 82 ist in der Verbindungsleitung 70 zwischen der ersten und zweiten Arbeitsleitung 71, 72 angeordnet. Ein drittes fernsteuerbares Ventil 83 stellt die Verbindung zwischen der Verbindungsleitung 70 und dem gemeinsamen Leitungsstück 73 her. Ein viertes fernsteuerbares Ventil 84 liegt im Zuge der Auslaßleitung 74 und ermöglicht, diese zu sperren bzw. zu öffnen. Schließlich ist noch ein fünftes fernsteuerbares Wegeventil 85 vorgesehen, welches den Einlaß 62 mit der zweiten Arbeitsleitung 72 und die erste Arbeitsleitung 71 mit einer Auslaßleitung 86 zu verbinden ermöglicht. Die Ventile 81, 82, 83 sind als Sitzventile zum Schalten großer Durchflußquerschnitte gestaltet. Die Ansteuerung der Ventile 81, 82, 83 erfolgt vorzugsweise über eine elektrisch ansteuerbare Pilot- oder Vorsteuerstufe.

Die Betriebsweise der in Fig. 6 gezeigten hydraulischen Schaltung ist wie folgt:

Zum Aufwärtsfahren des Stempels 20 (Rückhub) werden die Ventile 81 und 82 geöffnet, so daß die Pumpe 61 über die Einlaßleitung 62 und die Verbindungsleitung 70 beide Arbeitsleitungen 71 und 72 unter Druck setzt. Da jedoch die Kolbenfläche im Bereich der Kolbenräume 42 größer ist als die im Bereich der Kolbenräume 41, führt der Differenzdruck an den Kolben 40 zu einer Aufwärtsbewegung der Kolben und der Kolbenstangen. Die aus den Kolbenräumen 41 verdrängte Hydraulikflüssigkeit gelangt über die Leitungen 43, 71 und 70 in die Arbeitsleitung 72, d. h. der Aufwärtshub erfolgt relativ rasch.

Zum Abwärtsfahren (Vorhub) des Stempels 20 werden die Ventile 81, 83 und 84 geöffnet, so daß Hydraulikflüssigkeit über die Arbeitsleitung 71 zuströmen und über die Arbeitsleitung 72 abströmen kann. Wenn der Stempel 20 sich seiner unteren Stellung nähert, wird der Lagesensor 46 erregt, und die elektrische Steuerschaltung 50 schließt das Ventil 84 über die Steuerleitung 54. Dadurch kann der aus den Kolbenräumen 42 entweichende Hydraulikstrom nur über die Drossel oder Stromregelung 79 abfließen, wobei der Öffnungsdruck von 4 bar des Rückschlagventils 80 zu überwinden ist. Der Stempel 20 nähert sich also seiner unteren Endstellung im Kriechgang. Die Endstellung selbst wird durch den Lagesensor 47 festgestellt.

In dieser Endstellung wird die variable Pumpe 61 auf Nullhub verstellt. Gleichzeitig sind die Kolben 40 hydraulisch eingespannt, da in den Kolbenräumen 41 der Druck des Speichers 64 und in den Kolbenräumen 42 der Druck des Speichers 78 herrschen. Diese Einspannung ist aber nicht starr, da die Speicher eine gewisse elastische Nachgiebigkeit zeigen. Wenn demnach beim Mischvorgang auf den Stempel 20 von unten her eine stärkere Kraft einwirkt als die hydraulische Kraft infolge des Druckspeichers 64, kann der Stempel 20 nach oben zurückweichen, wobei die verdrängte Hydraulikflüssigkeit in den Speicher wegen des gesperrten Rückschlagventils 63 zurückströmt. Wenn alsdann der Mischvorgang zu einer Entlastung in der Mischkammer führt, kehrt der Stempel 20 in seine untere Stellung zurück. Es versteht sich, daß bei diesen Vorgängen die Hydraulikflüssigkeitssäule in dem Kolbenraum 42 und der Arbeitsleitung 72 über die Stromregeleinrichtung oder Drossel 79 in den Speicher 78 verdrängt wird, während der Rückfluß in den Kolbenraum 42 über die Nachsaugleitung 76 und das Rückschlagventil 77 erfolgt. Die Aufnahmefähigkeit der Druckspeicher 64 und 78 wirkt sich wie ein Puffer auf den Stempel 20 aus, der bei größerer Belastung infolge des Mischvorgangs elastisch zurückweicht und wieder zurückgestellt wird. Dies ist für den Mischvorgang günstig.

Das Ventil 85 ermöglicht das Anheben des Stempels 20 in Notsituationen. Die Einlaßleitung 62 kann nämlich unmittelbar mit der zweiten Arbeitsleitung 72 verbunden werden, während die erste Arbeitsleitung 71 mit der zusätzlichen Auslaßleitung 86 verbunden wird. In einer solchen Situation schließt das Sitzventil 82 automatisch aufgrund seiner Bauweise, da der über die Verbindungsleitung 70 zugeführte Öffnungsdruck fehlen würde.

Es versteht sich, daß die hydraulische Schaltung abgewandelt werden könnte, ohne aus dem Bereich der in den Ansprüchen angegebenen Erfindung zu gelangen. Beispielsweise ist es nicht notwendig, daß die Ventile 83 und 84 hintereinander geschaltet sind, vielmehr wäre auch eine Parallelschaltung möglich, da die Funktionen "rasches Abwärtsfahren" und "Abwärtsfahren im Schleichgang" sowie "Mischbetriebsstellung des Stempels" nacheinander eingestellt werden und man für diese Funktionen jeweils ein getrenntes schaltbares Ventil vorsehen könnte. Die Funktion "Aufwärtsfahren im Schnellgang" könnte auch dadurch bewerkstelligt werden, daß der Ring der Verteilleitungen 44 durch eine Ventileinrichtung unterbrochen ist, die dafür sorgt, daß nur zwei der vier Zylinder 31 bis 34 mit Hydraulikflüssigkeit von der Pumpe 61 her über die Leitungen 70, 72 beaufschlagt werden, während den Kolbenräumen 42 der beiden restlichen Zylinder die aus den Räumen 41 verdrängte Hydraulikflüssigkeit zugeführt wird, wobei die erwähnte Ventileinrichtung die Verteilleitung 43 entsprechend mit dem abgetrennten Teil der Verteilleitung 44 verbindet.

## Patentansprüche

1. Innenmischer mit einem Mischergehäuse (1), darin (1) angeordneten Mischeinrichtungen (5 bis 7), einer Beschickungsöffnung (3), die durch einen Stempel (20) verschließbar ist, und mit einem auf der Beschickungsöffnung (3) aufgesetzten Füllschacht (2), der mit wenigstens einer verschließbaren Füllöffnung (16) versehen ist, wobei der Stempel (20) im Füllschacht (2) auf- und abgleitend geführt und mit einer hydraulischen Betätigungseinrichtung (30), die Kolben (40), Kolbenstangen (38) und Kolbenräume (41, 42) und eine hydraulische Steuereinrichtung (60) aufweist, angetrieben ist, dadurch gekennzeichnet, daß der Stempel (20) mit Stempelstangenmitteln (21) verbunden ist, die an gehäusefesten Führungsmitteln (26, 27) geführt sind und die an einem bewegbaren Querhaupt (22) befestigt sind, daß die Betätigungseinrichtung (30) mindestens zwei hydraulische, doppeltwirkende Zylinder (31 bis 34) enthält, die seitlich von dem Füllschacht (2) und um die Stempelstangenmittel (21) symmetrisch verteilt angeordnet sind und einerseits mit dem Querhaupt (22) und andererseits mit dem Mischergehäuse (1) oder dem Füllschacht (2) gelenkig verbunden sind.

2. Innenmischer nach Anspruch 1, dadurch gekennzeichnet, daß die Betätigungseinrichtung (30) vier hydraulische Zylinder (31 bis 34) enthält, die paarweise an zwei Querträgern (23, 24) angreifen, welche Teil des Querhauptes (22) sind.

3. Innenmischer nach Anspruch 2 mit einem Einfüllschacht (2) von rechteckförmigem Grundriß, dadurch gekennzeichnet, daß an jeder der vier Ecken des Einfüllschachtes (2) ein hydraulischer Zylinder (31, 32, 33, 34) angeordnet ist, während die Seiten des Einfüllschachtes (2) von Hydraulikzylindern frei sind.

4. Innenmischer nach Anspruch 3, dadurch gekennzeichnet, daß der Einfüllschacht (2) an jeder der vier Seiten mindestens eine Zugangsöffnung (15) oder eine Füllöffnung (16) aufweist.

5. Innenmischer nach einem der Ansprüche 1 bis 4, dadurch gekennzeichnet, daß die Zylinder (31 bis 34) parallel und in gleichem Abstand zu den Stempelstangenmitteln (21) angeordnet sind.

6. Innenmischer nach einem der Ansprüche 1 bis 5, daurch gekennzeichnet, daß die Befestigung der Zylinder (31 bis 34) an dem Querhaupt (22) bzw. an dem Gehäuse (1, 2) jeweils über Gelenke (36, 37) erfolgt.

7. Innenmischer nach Anspruch 1, dadurch gekennzeichnet, daß die hydraulische Steuereinrichtung (60) eine Einlaßleitung (62) zur Hydraulikflüssigkeitszufuhr, eine Auslaßleitung (74) zur Hydraulikflüssigkeitsabfuhr, eine erste Arbeitsleitung (71) zur Abwärtsfahrt des Stempels (20), eine zweite Arbeitsleitung (72) zur Aufwärtsfahrt des Stempels, eine Verbindungsleitung (70) zwischen den Arbeitsleitungen (71, 72), eine Ablaufleitung (75) zum gedrosselten Hydraulikflüssigkeitsrücklauf, eine Nachsaugleitung (76), einen mit der Einlaßleitung verbundenen ersten Druckspeicher (64), einen mit der Nachsaugleitung (76) verbundenen zweiten Druckspeicher (78) sowie Ventileinrichtungen (81 bis 84) zur Verbindung und Sperrung der Leitungen (62, 70 bis 75) untereinander und zur Einstellung der Betriebszustände "Aufwärtsfahrt des Stempels", "Abwärtsfahrt des Stempels", "Halten des Stempels", "Halten des Stempels in oberer Lage" und "Halten des Stempels in untere Lage" bzw. "Mischbetriebsstellung" enthält, wobei in der Mischbetriebsstellung der Ventileinrichtungen die Nachsaugleitung (76) mit dem zweiten Druckspeicher (78) an die zweite Arbeitsleitung (72) anschließbar ist, während die erste Arbeitsleitung (71) mit dem ersten Druckspeicher (64) in Verbindung steht.

8. Innenmischer nach Anspruch 1, dadurch gekenntzeichnet, daß die Ventileinrichtung ein erstes Ventil (81) zur Abwärtsfahrt des Stempels, ein zweites Ventil (82) zur Aufwärtsfahrt des Stempels, ein drittes Ventil (83) zum Kombinationssteuern und ein viertes Ventil (84) zum Öffnen der Auslaßleitung (74) aufweisen, wobei das erste Ventil (81) je nach Stellung die Einlaßleitung (62) und den ersten Druckspeicher (64) mit der ersten Arbeitsleitung (71) verbindet oder aber die Einlaßleitung (62) und den ersten Druckspeicher (64) gegenüber der Arbeitsleitung (71) sperrt, das zweite Ventil (82) in der Verbindungsleitung (70) zwischen den Arbeitsleitungen (71, 72) angeschlossen ist, das dritte Ventil (83) die Auslaßleitung (74), die Ablaufleitung (75) und die Ansaugleitung (76) mit der zweiten Arbeitsleitung (72) verbindet, bzw. die Auslaßleitung (74) die Ablaufleitung (75) und die Ansaugleitung (76) gegen die zweite Arbeitsleitung (72) sperrt, das vierte Ventil (84) zum Wirksamwerden der Auslaßleitung (74) oder der Ablaufleitung (75) angeordnet ist.

9. Innenmischer nach Anspruch 8, dadurch gekennzeichnet, daß das dritte (83) und das vierte (84) Ventil in einem gemeinsamen, die Auslaßleitung, die Ablaufleitung und die Nachsaugleitung betreffenden Leitungsstück (73) in Auslaßrichtung hintereinander angeordnet sind.

10. Innenmischer nach einem der Ansprüche 7 bis 9, dadurch gekennzeichnet, daß die Ablaufleitung (75) ein Rückschlagventil (80) mit vorgegebenem Öffnungsdruck beinhaltet.

11. Innenmischer nach einem der Ansprüchen 7 bis 10, dadurch gekennzeichnet, daß der erste Druckspeicher (64) über eine erste Stromregeleinrichtung (67) mit dem ersten Ventil (81) verbunden ist.

12. Innenmischer nach einem der Ansprüche 9 bis 11, dadurch gekennzeichnet, daß eine zweite Stromregeleinrichtung (79) das gemeinsame Leitungsstück (73) mit dem zweiten Druckspeicher (78) und mit der Ablaufleitung (75) verbindet.

**Claims**

1. Internal mixer having a mixer housing (1), mixing arrangements (5 to 7) disposed in (1), a feed aperture (3) which is sealable by means of a ram (20), and a filler shaft (2), which is placed over the feed aperture (3) and is provided with at least one sealable filler aperture (16), the ram (20) being guided so as to slide upwardly and downwardly in the filler shaft (2) and being driven by a hydraulic actuating means (30), which includes pistons (40), piston rods (38), piston chambers (41, 42) and a hydraulic control arrangement (60), characterised in that the ram (20) is connected to ram rod means (21), which are guided along guide means (26, 27) secured to the housing and which are mounted on a displaceable cross-piece member (22), in that the actuating means (30) includes at least two hydraulic, double-acting cylinders (31 to 34), which are disposed so as to be symmetrically distributed laterally of the filler shaft (2) and around the ram rod means (21) and are pivotally connected, on the one hand, to the cross-piece member (22), and, on the other hand, to the mixer housing (1) of the filler shaft (2).

2. Internal mixer according to claim 1, characterised in that the actuating means (30) includes four hydraulic cylinders (31 to 34), which engage in pairs with two transverse support members (23, 24), which form part of the cross-piece member (22).

3. Internal mixer according to claim 2, having a filler shaft (2) of rectangular configuration, characterised in that a hydraulic cylinder (31, 32, 33, 34) is disposed at each of the four corners of the filler shaft (2), while the sides of the filler shaft (2) are free of hydraulic cylinders.

4. Internal mixer according to claim 3, characterised in that the filler shaft (2) has at least one inlet aperture (15) or one filler aperture (16) at each of the four sides.

5. Internal mixer according to one of claims 1 to 4, characterised in that the cylinders (31 to 34) are disposed parallel to, and at the same spacing from, the ram rod means (21).

6. Internal mixer according to one of claims 1 to 5, characterised in that the cylidners (31 to 34) are mounted on the cross-piece member (22), or respectively on the housing (1, 2), through the intermediary of respective pivot joints (36, 37).

7. Internal mixer according to claim 1, characterised in that the hydraulic control arrangement (60) includes an inlet pipe (62) for the supply of hydraulic fluid, an outlet pipe (74) for the discharge of hydraulic fluid, a first operating pipe (71) for the downward displacement of the ram (20), a second operating pipe (72) for the upward displacement of the ram, a connection pipe (70) between the operating pipes (71, 72), a discharge pipe (75) for the throttled return of hydraulic fluid, a suction pipe (76), a first pressure reservoir (64) which is connected to the inlet pipe, a second pressure reservoir (78) which is connected to the suction pipe (76), and valve arrangements (81 to 84) for interconnecting and blocking the pipes (62, 70 to 75) and for setting the operating conditions "upward displacement of the ram", "downward displacement of the ram", "maintaining the ram in its upper position" and "maintaining the ram in its lower position", or respectively "mixing position", the suction pipe (76) being capable of communicating with the second operating pipe (72) with the second pressure reservoir (78) when the valve arrangements are in the mixing position, while the first operating pipe (71) is connected to the first pressure reservoir (64).

8. Internal mixer according to claim 1, characterised in that the valve arrangements include a first valve (81) for the downward displacement of the ram, a second valve (82) for the upward displacement of the ram, a third valve (83) for controlling the combination, and a fourth valve (84) for opening the outlet pipe (74), wherein, depending on its position, the first valve (81) connects the inlet pipe (62) and the first pressure reservoir (64) to the first operating pipe (71), or, however, it blocks the inlet pipe (62) and the first pressure reservoir (64) from the operating pipe (71), the second valve (82) is connected in the connection pipe (70) between the operating pipes (71, 72), the third valve (83) connects the outlet pipe (74), the discharge pipe (75) and the suction pipe (76) to the second operating pipe (72), or respectively it blocks the outlet pipe (74), the discharge pipe (75) and the suction pipe (76) from the second operating pipe (72), and the fourth valve (84) is provided in order to activate the outlet pipe (74) of the discharge pipe (75).

9. Internal mixer according to claim 8, characterised in that the third valve (83) and the fourth valve (84) are disposed one behind the other, when viewed in the outlet direction, in a pipe portion (73) common to the oultet pipe, the discharge pipe and the suction pipe.

10. Internal mixer according to one of claims 7 to 9, characterised in that the discharge pipe (75) includes a check valve (80) having a prescribed opening pressure.

11. Internal mixer according to one of claims 7 to 10, characterised in that the first pressure reservoir (64) is connected to the first valve (81) through the intermediary of a first current regulating means (67).

12. Internal mixer according to one of claims 9 to 11, characterised in that a second current regulating means (79) connects the common pipe portion (73) to the second pressure reservoir (78) and to the discharge pipe (75).

**Revendications**

1. Mélangeur interne comportant un carter (1), des dispositifs de mélange (5 à 7) disposés dans ce carter (1), une ouverture de chargement (3), qui peut être fermée par un poinçon (20), et une cheminée de remplissage (2) installée sur l'ouverture de chargement (3) et équipée d'au moins une ouverture de remplissage (7) pouvant être fermée, le poinçon (20) étant guidé dans la cheminée de remplissage (2) de manière à glisser selon un va-et-vient vertical et étant entraîné par un dispositif d'actionnement hydraulique (30), qui comporte un piston (40), une tige de piston (38) et des logements de pistons (41, 42) et un dispositif de commande hydraulique (60), caractérisé en ce que le poinçon (20) est relié à des moyens en forme de tige (21), qui sont guidés dans des moyens de guidage (26, 27) solidaires du carter et sont fixés à une tête transversale mobile (22), que le dispositif d'actionnement (30) contient au moins deux vérins hydrauliques à double effet (31 à 34), qui sont disposés latéralement par rapport à la cheminée de remplissage (2), en étant répartis symétriquement autour des moyens (21) en forme de tige du poinçon et sont reliés par articulation d'une part à la tête transversale (22) et d'autre part au carter (1) du mélangeur ou à la cheminée de remplissage (2).

2. Mélangeur interne selon la revendication 1, caractérisé en ce que le dispositif d'actionnement (30) contient quatre vérins hydrauliques (31 à 34), qui attaquent, par couples, deux supports transversaux (23, 24), qui font partie de la tête transversale (22).

3. Mélangeur interne selon la revendication 2, comportant une cheminée de remplissage (2) possédant un contour rectangulaire en projection horizontale, caractérisé en ce qu'en chacun des quatre coins de la cheminée de remplissage (2) est disposé un vérin hydraulique (31, 32, 33, 34), tandis que les côtés de la cheminée de remplissage (2) ne comportent aucun vérin hydraulique.

4. Mélangeur interne selon la revendication 3, caractérisé en ce que la cheminée de remplissage (2) comporte, sur chacun des quatre côtés, au moins une ouverture d'accès (15) ou une ouverture de remplissage (16).

5. Mélangeur interne selon l'une des revendications 1 à 4, caractérisé en ce que les vérins (31 à 34) sont disposés parallèlement et à une même distance des moyens en forme de tige (21) du poinçon.

6. Mélangeur interne selon l'une des revendications 1 à 5, caractérisé en ce que la fixation des vérins (31 à 34) à la tête transversale (22) ou au carter (1, 2) est réalisée respectivement par l'intermédiaire d'articulations (36, 37).

7. Mélangeur interne selon la revendication 1, caractérisé en ce que le dispositif de commande hydraulique (60) contient une canalisation d'amenée (62) servant à amener le liquide hydraulique, une canalisation de sortie (74) servant à évacuer le liquide hydraulique, une première canalisation de travail (71) servant à faire descendre le poinçon (20), une seconde canalisation de travail (72) servant à faire remonter le poinçon, une canalisation de liaison (70) installée entre les canalisations de travail (71, 72), une canalisation d'évacuation (75) servant à faire refluer le liquide hydraulique, d'une manière étranglée, une canalisation d'aspiration (76), un premier accumulateur de pression (64) relié à la canalisation d'amenée, un second accumulateur de pression (78) relié à la canalisation d'aspiration (76) ainsi que des dispositifs à soupapes (81 à 84) servant à relier entre elles et séprarer les unes des autres les canalisations (62, 70 à 75) et à régler les états de fonctionnement "montée du poinçon", "descente du poinçon", "maintien du poinçon dans la position supérieure" et "maintien du poinçon dans la position inferieure" ou "position de mélange", auquel cas, lorsque les dispositifs à soupapes sont dans la position de mélange, la canalisation d'aspiration (76) peut être raccordée par le second accumulateur de pression (78) à la seconde canalisation de travail (72), tandis que la première canalisation de travail (71) est reliée au premier accumulateur de pression (64).

8. Mélangeur interne selon la revendication 1, caractérisé en ce que les dispositifs à soupapes comporte une première soupape (81) pour la montée du poinçon, une seconde soupape (82) pour la descente du poinçon, une troisième soupape (83) pour la commande combinée et une quatrième soupape (84) pour l'ouverture de la canalisation de sortie (64), et dans lequel, en fonction de sa position, la première soupape (81) relie la canalisation d'entrée (62) et le premier accumulatuer de pression (64) à la première canalisation de travail (71) ou interrompt la liaison de la canalisation d'amenée (62) du premier accumulateur de pression (64) par rapport à la canalisation de travail (71), la seconde soupape (82) est montée dans la canalisatoin de liaison (70) située entre les canalisations de travail (71, 72), la troisième soupape (83) relie la canalisation de sortie (74), la canalisation d'évacuation (75) et la canalisation d'aspiration (76) à la seconde canalisation de travail (72) ou interrompt la liaison de la canalisation de sortie (74), de la canalisation d'évacuation (75) et de la canalisation d'aspiration (76) par rapport à la seconde canalisation de travail, et la quatrième soupape (84) est disposée de manière à rendre active la canalisation de sortie (74) ou la canalisation d'évacuation (75).

9. Mélangeur interne selon la revendication 8, caractérisé en ce que la troisième soupape (83) et la quatrième soupape (84) sont disposées l'une à la sitluite de l'autre dans la direction de sortie dans un élément de canalisation commun (73) raccordé à la canalisation de sortie, à la canalisation d'évacuation et à la canalisation d'aspiration.

10. Mélangeur interne selon l'une des revendications 7 à 9, caractérisé en ce que la canalisation d'évacuation (75) contient une soupape antiretour (81) possédant une pression d'ouverture prédéterminée.

11. Mélangeur interne selon l'une des revendications 7 à 10, caractérisé en ce que le premier accumulateur de pression (64) est relié par l'intermédiaire d'un premier dispositif de régulation d'écoulement (67) à la première soupape (81).

12. Mélangeur interne selon l'une des revendications 9 à 11, caractérisé en ce qu'un second dispositif de régulation d'écoulement (79) relie l'élément de canalisation commun (73) au second accumulateur de pression (78) et à la canalisation d'évacuation (75).

Fig. 1

Fig.2

*Fig. 3*

EP 0 272 338 B1

Fig. 4

Fig. 5

*Fig. 6*